# EUROPÄISCHE PATENTSCHRIFT

(11) **EP 3 025 145 B1**
(45) Veröffentlichungstag und Bekanntmachung des Hinweises auf die Patenterteilung: **28.06.2017**
(21) Anmeldenummer: 14795775.7
(22) Anmeldetag: 22.07.2014
(51) Int. Cl.: G01N 21/89, F16C 32/06, G01B 5/00, G01N 27/90

(54) **VORRICHTUNG ZUR INSPEKTION VON WERKSTÜCKOBERFLÄCHEN UND BANDMATERIALIEN**
DEVICE FOR INSPECTING WORKPIECE SURFACES AND STRIP MATERIALS
DISPOSITIF SERVANT À INSPECTER DES SURFACES DE PIÈCES À USINER ET DES MATÉRIAUX EN BANDE

(30) Priorität: 22.07.2013 DE 102013012174
(43) Veröffentlichungstag der Anmeldung: 01.06.2016
(73) Patentinhaber: ZS-Handling GmbH, 93055 Regensburg (DE)
(72) Erfinder: SCHILP, Michael, 93055 Regensburg (DE); ZIMMERMANN, Josef, 93055 Regensburg (DE); ZITZMANN, Adolf, 92552 Teunz (DE)
(74) Vertreter: Staudte, Ralph
(86) Internationale Anmeldenummer: PCT/DE2014/000375
(87) Internationale Veröffentlichungsnummer: WO 2015/010681

(56) Entgegenhaltungen:
- EP-A1- 0 315 315
- DE-A1- 19 909 534
- US-B1- 6 455 982

## Beschreibung

Die Erfindung betrifft eine Vorrichtung zur Inspektion von Werkstückoberflächen mittels eines Sensors wie z. B. einer Kamera oder einem Wirbelstromsensor. Die Erfindung betrifft insbesondere eine Vorrichtung, die dazu geeignet ist, den Sensor in einem konstanten Abstand zur Werkstückoberfläche zu halten und eine Abstandsänderung schnell zu korrigieren. Die Erfindung betrifft weiterhin die Inspektion oder Messung von Materialeigenschaften an Bandmaterialien.

Aus dem Stand der Technik sind Systeme bekannt, die es ermöglichen, eine Oberfläche eines Werkstücks oder von Bandmaterial zu inspizieren. Dazu müssen Sensoren genau in einer vorbestimmten Position gehalten werden. Wenn z. B. eine optische Inspektion mittels eines optischen Systems, welches eine sehr geringe Tiefenschärfe aufweist, durchzuführen ist, muss beim Führen des optischen Systems über die Werkstückoberfläche der Abstand des Objektivs dieses Systems und der Werkstückoberfläche konstant gehalten werden. Derartige Systeme sind aus den Dokumenten WO 94/18643 A1 und WO 01/23869 A1 bekannt. Vergleichbare Anforderungen gelten auch für andere Sensoren und andere Mess- oder Inspektionsverfahren wie z. B. für kapazitive oder induktive Inspektionsverfahren.

So ist beispielsweise aus dem Dokument EP 0315315 A1 eine Messvorrichtung bekannt, bei der mittels eines beweglich aufgehängten Sensorkopfs, in den eine Messspule eingebaut ist, die Dicke einer Beschichtung aus einem nicht leitenden Material, z. B. von Farbe, auf einer Metalltragschicht wie z. B. einem Metallstreifen gemessen wird. Der Sensorkopf wird durch eine konstante Kraft, die mittels eines Gewichts oder einer Feder erzeugt wird, in Richtung der beschichteten Oberfläche der Metalltragschicht gedrückt. Durch Luftdüsen an dem Sensorkopf strömt Luft mit einem konstanten Druck, welcher der konstanten Kraft entgegenwirkt. Dadurch wird der Sensorkopf auf einem Luftkissen getragen, und zwar mit einem konstanten Abstand über der beschichteten Oberfläche der Metalltragschicht. Weiterhin ist aus dem Dokument US 6,455,982 B1 eine Vorrichtung bekannt, welche ein Objekt mithilfe von abgestrahlten Ultraschallwellen schweben lässt. Dabei wird ein Schwingungserzeuger durch eine Sonotrode oder mehrere Sonotroden, die von unten an ihm befestigt sind, angeregt, wodurch das Objekt auf seiner gegenüberliegenden Seite zum Schweben gebracht wird.

Je höher die geforderte Messgenauigkeit ist, umso höher sind die Anforderungen an den mechanischen Aufbau der Messanordnung. Das trifft besonders zu, wenn die Messgenauigkeit von der Einhaltung eines definierten Abstands zwischen Sensorposition und Werkstückoberfläche abhängt. Wenn z. B. bei der Überwachung von Bandmaterialien ein Sensor dicht über der Oberfläche des Bandmaterials quer zur Bewegungsrichtung des Bands zu bewegen ist, werden dafür starre Traversen eingesetzt.

Da das Bandmaterial während der Bewegung meist etwas schwingt, entstehen Messfehler. Es entstehen ebenfalls Messfehler, wenn das Band an der Messposition über eine Walze läuft, da Walzen Unrundheiten aufweisen können. Falls es sich bei dem zu inspizierenden Bandmaterial z. B. um ein Stahlblech mit einer harten Oberfläche handelt, kann in einem solchen Fall der Sensor mit einem Schlitten gekoppelt sein, welcher ein auf der Oberfläche des Stahlbandes abrollendes Stützrad aufweist, sodass der Sensor immer den gleichen Abstand zur Stahlbandoberfläche hat.

Es gibt jedoch eine Reihe von Anwendungen, bei denen das Bandmaterial während eines Behandlungsprozesses, z. B. eines Beschichtungsprozesses, inspiziert werden muss. Dabei durchläuft das Bandmaterial z. B. einen Trocknungstunnel, in welchem eine konstante Temperatur und eine gleichmäßige Temperaturverteilung beibehalten werden müssen. In diesem Fall könnte die vorstehend beschriebene Vorrichtung aus zwei Gründen nicht eingesetzt werden: Durch den direkten mechanischen Kontakt des Stützrades mit dem Bandmaterial könnte einerseits die empfindliche Oberfläche des Bandmaterials beschädigt und andererseits die Oberflächentemperatur des Bandmaterials an der Berührungsstelle verändert werden.

Somit besteht die Aufgabe der Erfindung darin, eine Vorrichtung bereitzustellen, mit welcher ein Sensor in einem genau vorgegebenen Abstand über einer sich bewegenden Werkstückoberfläche positioniert oder bewegt werden kann und bei Dickenschwankungen des Werkstücks oder bei Unrundheiten einer Stütz- oder Umlenkwalze der Abstand zwischen dem Messsystem und der Werkstückoberfläche, nachfolgend Messabstand genannt, konstant gehalten wird. Eine weitere Forderung besteht darin, dass das Nachjustieren des Sensors zur Beibehaltung des gewünschten Messabstandes in sehr kurzen Zeiten erfolgen muss und die Temperaturverteilung des Bandmaterials an der Messstelle möglichst wenig beeinflusst wird.

Die Aufgabe wird mit einer Vorrichtung nach Anspruch 1 dadurch gelöst, dass wenigstens eine Ultraschall-Sonotrode mit dem Messsystem mechanisch gekoppelt ist. Die Ultraschall-Sonotrode ist so ausgerichtet, dass deren schallabstrahlende Fläche der Werkstückoberfläche gegenüber liegt, und wird so betrieben, dass die abgestrahlten Schallwellen ein Levitationskraftfeld erzeugen, welches eine Berührung der Sonotrodenoberfläche mit der Werkstückoberfläche verhindert, wenn die Sonotrode und das Werkstück mittels eines Drängmittels gegeneinander gedrängt werden.

Unter Drängmittel sind alle technischen Mittel zu verstehen, die geeignet sind, die Sonotrode mit dem daran gekoppelten Sensor mittels einer vorbestimmten Drängkraft gegen die Werkstückoberfläche zu drängen. Die Drängkraft kann durch eine mechanische Feder, durch einen gesteuerten mechanischen Antrieb, einen hydraulischen Antrieb oder einen pneumatischen Antrieb erzeugt werden. Sie kann auch durch magnetische Anziehung oder Abstoßung, ebenso durch Nutzung der Gravitationskraft auf eine Masse oder durch Vakuum, d. h. unter Nutzung des äußeren Luftdrucks, erzeugt werden.

Ein wichtiger Vorteil der vorstehend beschriebenen Vorrichtung zur Oberflächeninspektion besteht darin, dass das Levitationskraftfeld die Temperaturverteilung an der Mess- oder Inspektionsstelle nicht wesentlich beeinflusst.

Der Abstand des Sensors zur Werkstückoberfläche kann bei Bedarf verändert werden, indem die elektrische Leistungsaufnahme der Sonotrode variiert wird. Dadurch verändert sich die Schwingungsamplitude. Ebenso ist mittels der elektrischen Leistungsregelung der Sonotrode eine sehr schnelle Änderung des Abstands des Sensors zur Werkstückoberfläche möglich.

Die Schallabstrahlfläche der Sonotrode weist eine zur Werkstückoberfläche korrespondierende Form auf, d. h. sie ist im Falle einer planen Werkstückoberfläche eben ausgeführt, im Falle einer zwei- oder dreidimensional gewölbten Werkstückoberfläche passend dazu gewölbt.

Nach Anspruch 2 ist eine Abstandssteuerung zur Steuerung des Abstandes zwischen der Werkstückoberfläche und der Sensoreinheit vorgesehen, wobei der Abstand durch Änderung der Schallenergie variierbar ist. Damit wird eine besonders schnelle und genaue Nachjustierung des Sensors bezüglich der Werkstückoberfläche ermöglicht.

Nach Anspruch 3 ist der Sensor von wenigstens zwei Sonotroden umgeben. Diese Anordnung ist besonders vorteilhaft, weil dadurch der Sensor vor schädlichen Einflüssen abgeschirmt ist.

Nach Anspruch 4 ist der Sensor mit wenigstens zwei Sonotroden gekoppelt, die getrennt ansteuerbar sind. Diese Ausführungsform hat den Vorteil, dass durch eine unterschiedliche Ansteuerung der Sonotroden auch eine geringfügige Kippung der beweglich aufgehängten Sensoreinheit ermöglicht wird, um damit den Sensor noch genauer positionieren zu können.

Die Vorrichtung zur Oberflächeninspektion wird anhand eines Beispiels in Verbindung mit zwei Zeichnungen näher erläutert:

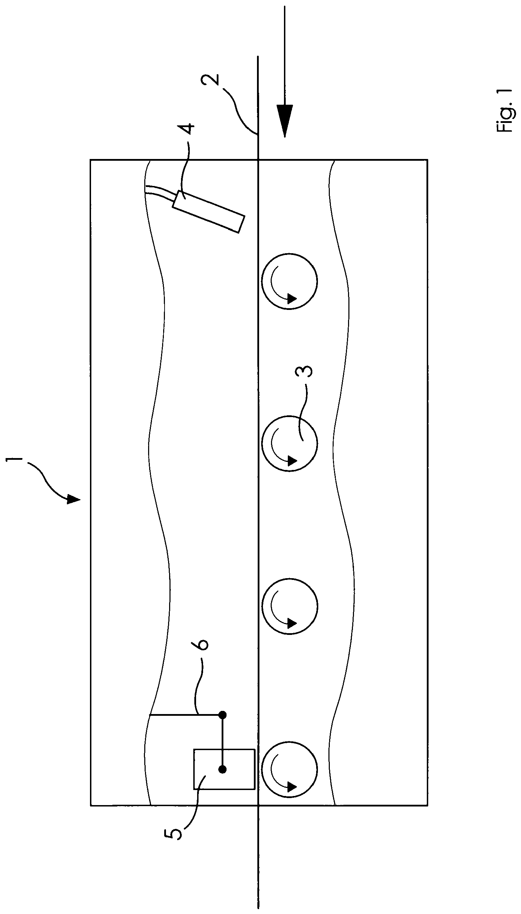

Die Fig. 1 zeigt einen Tunnelofen 1, in welchem ein Wärmebehandlungsprozess durchgeführt wird. Ein Bandmaterial 2 wird auf angetriebenen Rollen 3 durch den Tunnelofen 1 geführt. Am Eingang des Tunnelofens 1 wird mittels einer Sprühvorrichtung 4 Lack auf das Bandmaterial 2 gesprüht. Am Ausgang des Tunnelofens 1 ist eine schematisch dargestellte Sensoreinheit 5 zur Oberflächeninspektion angeordnet. Die Sensoreinheit 5 hängt an einer beweglichen Aufhängung 6 und schwebt in einem Abstand von 300 µm über dem Bandmaterial 2. Es ist zu beachten, dass der Abstand der Sensoreinheit 5 bezüglich der Bandmaterialoberfläche nicht mittels der beweglichen Aufhängung 6 eingestellt wird. Die Aufhängung 6 dient lediglich dazu, einen Teil des Gewichts der Sensoreinheit 5 aufzunehmen. Der verbleibende Teil des Gewichts wird als gravimetrische Drängkraft genutzt, die gegen eine Kraft wirkt, welche mittels des Ultraschall-Levitationskraftfelds erzeugt wird.

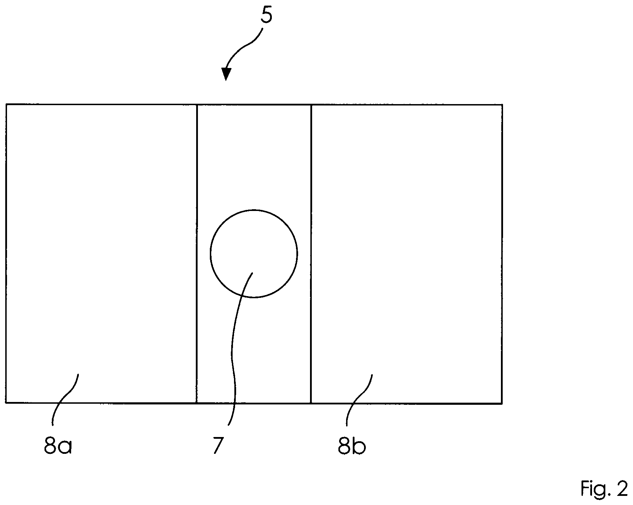

In Fig. 2 ist die Unterseite der Sensoreinheit 5, die auf die Oberfläche des Bandmaterials 2 gerichtet ist, schematisch dargestellt. Mit Bezugszeichen 7 ist ein Sensor, z. B. eine Kamera, bezeichnet. Mit den Bezugszeichen 8a, 8b sind zwei Sonotroden bezeichnet, die ein Ultraschall-Levitationskraftfeld erzeugen. Es ist hervorzuheben, dass der Lack auf dem den Tunnelofen verlassenden Bandmaterial 2 noch nicht ganz ausgehärtet und demzufolge noch empfindlich gegen mechanische Berührung ist. Besonders wichtig ist auch, dass die Temperatur des Bandes konstant gehalten und auch durch einen Messvorgang nicht beeinflusst wird. Es ist aber ebenso wichtig, die Schichtdicke möglichst unmittelbar hinter der Sprühvorrichtung bestimmen zu können, damit Abweichungen der Lackdicke oder andere Fehler schnell erkannt und korrigiert werden können.

Da das Levitationskraftfeld nahezu keinen Einfluss auf die Temperaturverteilung an der Oberfläche des Bandmaterials 2 hat, wird durch die Messung die empfindliche Lackschicht nicht beeinflusst.

## Patentansprüche

1. Vorrichtung zur Inspektion von Werkstückoberflächen und Bandmaterialien mit nachfolgenden Merkmalen:
- wenigstens einem Sensor **(7),** der für die Inspektion einer speziellen Werkstückoberfläche und/oder eines speziellen Bandmaterials **(2)** ausgebildet ist,
- wenigstens einer, eine Schallabstrahlfläche aufweisenden Sonotrode **(8a, 8b),** die mechanisch starr mit dem Sensor **(7)** verbunden ist, um eine Sensoreinheit **(5)** auszubilden, und
- einer mit der Sensoreinheit **(5)** gekoppelten beweglichen Positioniervorrichtung **(6)** zum Positionieren der Sensoreinheit **(5)** in Gegenüberlage zur Werkstück- oder Bandoberfläche, wobei
- die Positioniervorrichtung **(6)** ein Drängmittel aufweist, welches die Sensoreinheit **(5)** in Richtung Werkstück- oder Bandoberfläche drängt, wobei entweder eine vorbestimmte Drängkraft erzeugt oder die Gravitation als Drängkraft genutzt wird,
- die Schallabstrahlfläche der Sonotrode **(8a, 8b)** Ultraschall-Schwingungen ausführt, sodass unter Anwesenheit eines gasförmigen Mediums zwischen der Werkstück- oder Bandoberfläche und der Schallabstrahlfläche ein Ultraschall-Levitationskraftfeld wirkt, welches eine gegen die Drängkraft gerichtete Gegenkraft generiert, wodurch die Sensoreinheit beabstandet zur Werkstück- oder Bandoberfläche schwebend gehalten wird, wobei
der Sensor ausgebildet ist, um
- Oberflächenstrukturabweichungen oder Farbabweichungen oder Abweichungen des Reflexionsverhaltens oder Materialinhomogenitäten oder Fehlstellen der Werkstückoberfläche oder des Bandes oder
- die Banddicke oder die Dicke aufgebrachter Beschichtungen oder
- die Oberflächentemperatur an der Werkstück- oder Bandoberfläche zu erfassen.

2. Vorrichtung nach Anspruch 1, wobei eine Abstandssteuerung zur Steuerung des Abstandes zwischen der Werkstück- oder Bandoberfläche **(2)** und der Sensoreinheit **(5)** vorgesehen ist, wobei der Abstand durch Änderung der Schallenergie verändert wird.

3. Vorrichtung nach Anspruch 1, wobei der Sensor **(7)** von wenigstens zwei Sonotroden **(8a, 8b)** umgeben ist.

4. Vorrichtung nach Anspruch 1, wobei der Sensor **(7)** mit wenigstens zwei Sonotroden **(8a, 8b)** gekoppelt ist, die getrennt ansteuerbar sind.

## Claims

1. A device for inspecting workpiece surfaces and strip materials, comprising:
- at least one sensor **(7)** which is adapted for inspection of a special workpiece surface and/or a special strip material **(2),**
- at least one sonotrode **(8a, 8b)** having a sound-radiating surface and which is connected in a mechanically rigid manner to the sensor **(7)** to form a sensor unit **(5),** and
- a movable positioning device **(6)** coupled to the sensor unit **(5),** for positioning the sensor unit **(5)** in a position opposite the workpiece or strip surface, wherein
- the positioning device **(6)** has a force-applying member which urges the sensor unit **(5)** in the direction of the workpiece or strip surface, with either a predetermined urging force being produced or with gravity being used as the urging force,
- the sound-radiating surface of the sonotrode **(8a, 8b)** generates ultrasonic vibrations such that, in the presence of a gaseous medium, an ultrasonic levitation force field acts between the workpiece or strip surface and the sound-radiating surface, which generates a counterforce against the urging force, whereby the sensor unit is held hovering at a distance from the workpiece or strip surface,
the sensor being adapted to detect
- aberrations in the surface structure, colour or reflection behaviour of the workpiece surface or the strip, or material inhomogeneities or defects therein, or
- the strip thickness, or the thickness of applied coatings, or
- the surface temperature on the surface of the workpiece or the strip.

2. The device according to claim 1, wherein a distance controller is provided to control the distance between the surface of the workpiece or strip **(2)** and the sensor unit **(5),** said distance being changed by changing the sound energy.

3. The device according to claim 1, wherein the sensor **(7)** is surrounded by at least two sonotrodes **(8a, 8b).**

4. The device according to claim 1, wherein the sensor **(7)** is coupled to at least two sonotrodes **(8a, 8b)** which can be separately controlled.

## Revendications

1. Dispositif servant à inspecter des surfaces de pièces à usiner et des matériaux en bande, le dispositif comprenant les caractéristiques suivantes:
- au moins un capteur **(7),** lequel est conçu pour l'inspection d'une surface de pièce à usiner spécifique et/ou d'un matériau en bande **(2)** spécifique,
- au moins une sonotrode **(8a, 8b)** comportant une surface d'émission acoustique, ladite sonotrode étant reliée de manière rigide au capteur **(7)** afin de former une unité de détection **(5),** et
- un dispositif de positionnement **(6)** mobile couplé à l'unité de détection **(5)** et servant à positionner l'unité de détection **(5)** dans une position en vis-à-vis par rapport à la surface de bande ou de pièce à usiner, dans lequel
- le dispositif de positionnement **(6)** comporte un moyen de refoulement, qui refoule l'unité de détection **(5)** en direction de la surface de bande ou de pièce à usiner, dans lequel soit une force de refoulement prédéterminée est générée, soit la gravitation est utilisée comme force de refoulement,
- la surface d'émission acoustique de la sonotrode **(8a, 8b)** exécute des oscillations à ultrasons de sorte qu'en présence d'un milieu gazeux, un champ de force de lévitation à ultrasons exerce une action entre la surface de bande ou de pièce à usiner et la surface d'émission acoustique, lequel champ de force de lévitation à ultrasons génère une force antagoniste orientée à l'encontre de la force de refoulement, permettant par cela de maintenir en balance l'unité de détection à distance de la surface de bande ou de pièce à usiner, dans lequel
le capteur est réalisé pour détecter
- des écarts de structure de surfaces, ou des variations de couleurs, ou des écarts de comportement de réflexion, ou des inhomogénéités du matériau, ou des défauts de la surface de pièce à usiner ou de bande, ou
- l'épaisseur de la bande, ou l'épaisseur des revêtements appliqués, ou
- la température de surface à ladite surface de bande ou de pièce à usiner.

2. Dispositif selon la revendication 1, dans lequel une commande de distance est prévue pour commander la distance entre la surface de bande **(2)** ou de pièce à usiner et l'unité de détection **(5),** la distance étant modifiée par modification de l'énergie acoustique.

3. Dispositif selon la revendication 1, dans lequel le capteur **(7)** est entouré par au moins deux sonotrodes **(8a, 8b).**

4. Dispositif selon la revendication 1, dans lequel le capteur **(7)** est relié à au moins deux sonotrodes **(8a, 8b)** pouvant être commandées séparément.
